# EUROPEAN PATENT SPECIFICATION

(11) **EP 3 231 271 B1**
(45) Date of publication and mention of the grant of the patent: **19.09.2018**
(21) Application number: 17163205.2
(22) Date of filing: 28.03.2017
(51) Int. Cl.: A01D 34/74, A01D 34/00, A01D 75/28

(54) **ADJUSTABLE CUTTING MODULE**
EINSTELLBARES SCHNEIDEMODUL
MODULE DE COUPE RÉGLABLE

(30) Priority: 13.04.2016 IT UA20162555
(43) Date of publication of application: 18.10.2017
(73) Proprietor: Bernini, Fabrizio, 52021 Bucine - Arezzo (IT)
(72) Inventor: Bernini, Fabrizio, 52021 Bucine - Arezzo (IT)
(74) Representative: Paparo, Aldo

(56) References cited:
- EP-A1- 2 241 172
- WO-A1-2015/135049
- FR-A1- 2 743 689
- GB-A- 2 405 307
- US-A1- 2008 256 918

## Description

This invention relates to an adjustable cutting module for cutting the grass of, for example, lawns and uncultivated ground.

More specifically, this invention relates to an adjustable cutting module for cutting grass which can be installed on board, for example, an automatic self-propelled lawn mower robot.

In further detail, the adjustable cutting module according to this invention is also configured to be installed on a bush-cutter for gardening activities for cutting grass edges around flower beds and/or boundary walls in general in gardens, parks or lawns.

The expression "uncultivated ground" means even ground surfaces free from tough or woody vegetation such as bushes or shrubs in general.

In the prior art there are cutting modules installed on respective self-propelled lawn mower robots and/or manual bush-cutters which have a quite simplified structure. However, a simplified structure of the cutting modules and of the cutting robots in general results in a limited flexibility of use, poor comfort for the user and a reduced overall quality of the cutting the turf.

In the prior art the self-propelled lawn mower robot, and the bush-cutter, have certain operational shortcomings and some drawbacks, briefly described below.

In the case of the self-propelled lawn mower robot, due to the intrinsic structure of the frame it cannot reach completely all the parts of the grass which it trims with the blade, leaving, in fact, stretches of grass which are not fully cut, for example at the areas with differences in level and concavities where the cutting module, or rather the cutting blade, is not able to reach the bottom of the difference in level in a regular and/or correct manner.

In other words, the traditional frame of the lawn mower robot is such that it always keeps the cutting blade at the same distance from the turf, thus preventing the cutting from being performed adequately, sometimes also ruining the cutting blade which makes impact with the ground in a an anomalous manner, at ditches, slopes and dips due to the above-mentioned obvious interferences. Prior art lawn mower robots also generally have a frame with at least three wheels which do not make it possible to compensate in a suitable manner for the variations in slope of the ground, except with instability and poor grip with the ground on account of undulations and excessive rolling of the frame of the robot. In the prior art, in order to only partly overcome this drawback, there are lawn mower robots which allow a manual adjustment of the distance of the cutting module (of the cutting blade) from the ground by adjusting height of the frame carrying the robot. However, it should be noted that the adjustment is aimed more at moving the cutting blade to a predetermined height of the user according also to the height of the blades of grass on the ground, rather than compensating for the changes in levels and the irregularities of the ground. Other prior art device are those described by documents: FR27436689, WO2015/135049 and US2008/256918.

The aim of this invention is to resolve the problems encountered in the prior art by providing a cutting module which can be easily used for trimming and cutting the grass of lawns and ground according to a height desired by the user. More specifically, the aim of this invention is to provide an adjustable cutting module which is efficient and which allows the cut to be made on each type of turf and in any type of condition. A further aim of this invention is to provide a cutting module which makes it possible to cut in an effective and fast manner grassy stems in dips or at the start of even quite steep slopes without the turf being ruined by the unexpected impact of the cutting blade on the ground.

These and other aims are substantially achieved by an adjustable cutting module for cutting grass on even and continuous surfaces such as, for example, lawns and uncultivated ground, as described in one or more of the appended claims.

Further features and advantages of the present invention are more apparent from the detailed description of a preferred, embodiment of an adjustable cutting module according to this invention.

The dependent claims correspond to possible embodiments of the invention.

The description is provided below with reference to the accompanying drawings, which are also non-limiting and provided by way of example only, in which:
- Figure 1 is a perspective cutaway view of an adjustable cutting module according to this invention;

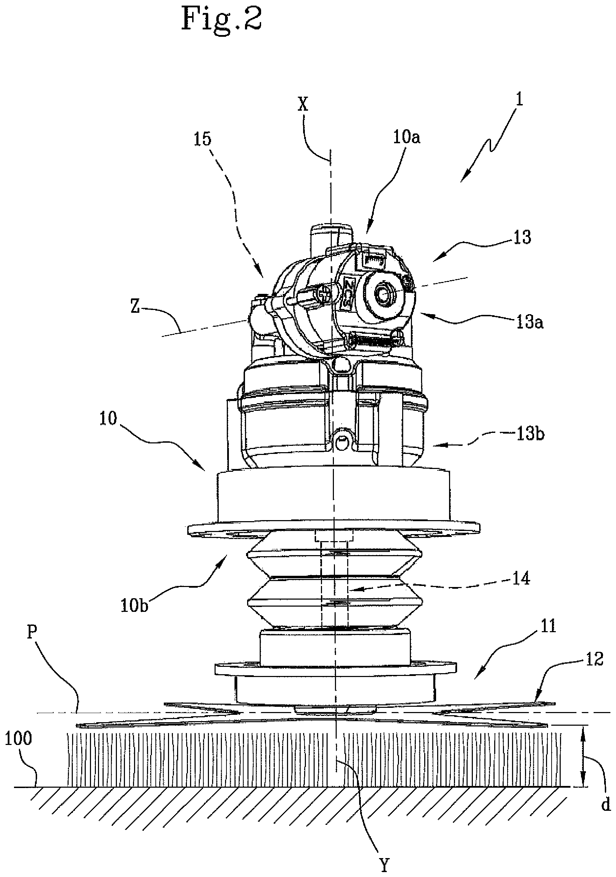

- Figure 2 is a perspective view of the cutting module shown in Figure 1;
- Figure 3 is a schematic side view of a self-propelled lawn mower robot with the adjustable cutting module of Figure 1 in accordance with an embodiment of this invention with some parts hidden to make visible others which would otherwise be hidden;
- Figure 4 is a lateral schematic view of a bush-cutter with the adjustable cutting module of Figure 1 in accordance with a different embodiment of this invention.

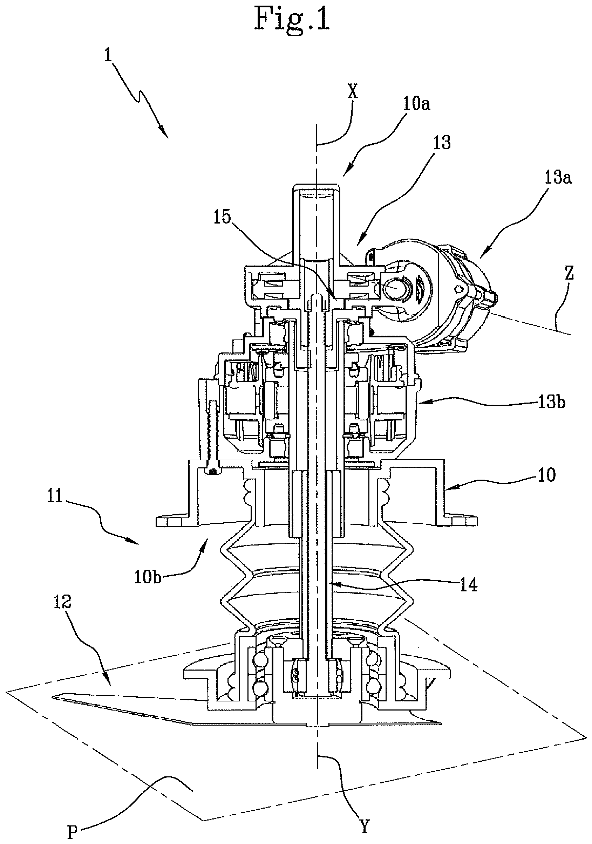

Figure 1 shows in its entirety an adjustable cutting module 1 for cutting the turf on regular and continuous surfaces 100, such as, for example, on lawns and uncultivated ground, private gardens, golf courses, communal green spaces and the like.

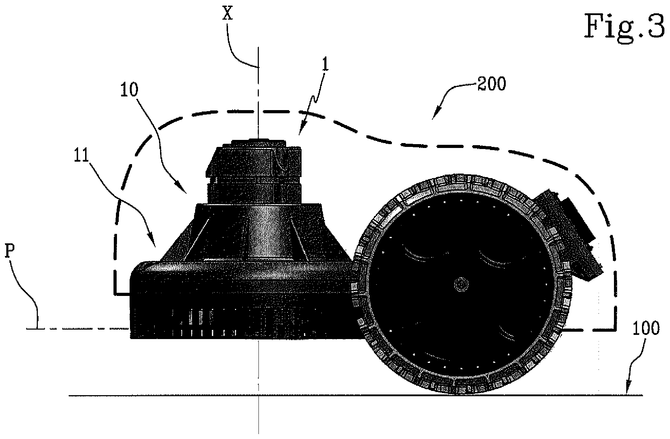

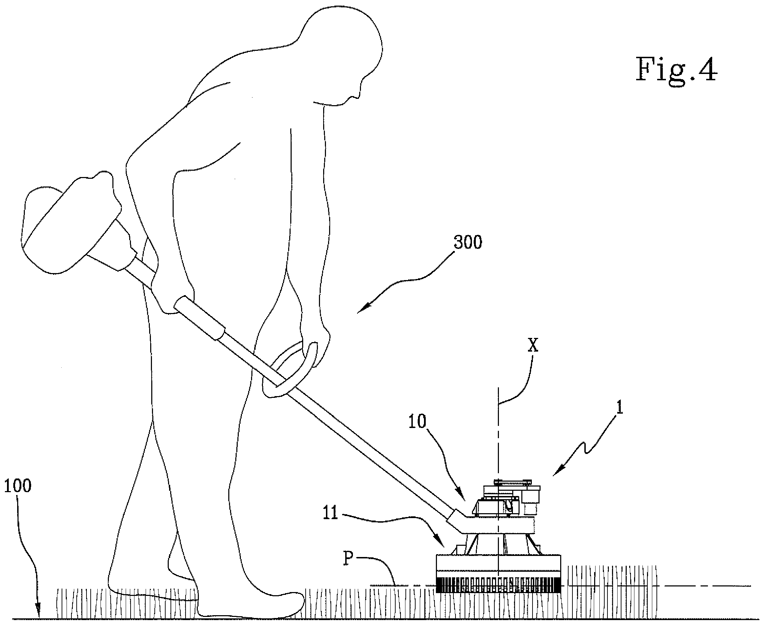

The cutting module 1 comprises a supporting structure 10 having cutting means 11 including at least one cutting blade 12 operatively associated with the supporting structure 10. The supporting structure 10 is configured to be installed on an automatic self-propelled robot 200 comprising at least one frame and two supporting wheels, as illustrated, for example, in Figure 3, or on a electric bush-cutter 300 for manual use, as illustrated for example in Figure 4.

This invention comprises a cutting blade 12 which may have, by way of example, a roto-translational or other type of movement, without thus limiting the scope of the invention, with respect to a relative axis of rotation, described in more detail below.

In accordance with the inventive concept of this invention, the cutting blade 12 is lying on a respective cutting plane "P" of the cutting module 1.

With reference to the accompanying drawings, the cutting blade 12 is a blade rotating about a relative central axis "X" of rotation, positioned transversally to the above-mentioned cutting plane "P". Preferably, the above-mentioned central axis "X" of rotation is perpendicular to the cutting plane "P".

The adjustable cutting module 1 comprises means 13 for movement of the cutting blade operatively associated with the cutting means 11. Preferably, the movement means 13 comprise a shaft 14 for rotating the cutting blade 12 coaxial with the central axis "X" of rotation and has at one end fastening means (not illustrated in detail in the accompanying drawings) for fitting the cutting blade 12.

The means 13 for moving the adjustable cutting module 1 comprise at least one actuator 13a configured to make an adjustment of a distance "d" of the cutting plane "P" of the cutting blade 12 relative to the ground 100.

More specifically, the actuator 13a of the movement means 13 is configured to perform a continuous adjustment of the distance "d" of the cutting plane "P" of the cutting blade 12 (and therefore also of the cutting blade 12) relative to the ground 100 by measuring a resistant torque acting on the blade 12 and respective rotation shaft 14 when it is in use.

For this purpose, preferably, the adjustable cutting module 1 comprises a control unit (not illustrated in the accompanying drawings) configured to measure the resistant torque acting on the cutting blade 12 and actuate the movement means 13 for moving, towards or away, the cutting blade 12 from the ground 100 in an operating condition of the cutting module 1. The control unit is housed in a predetermined zone of the supporting structure 10 and is an integral part of the cutting module 1.

More specifically, when the control unit is configured for measuring a resistant torque greater than a predetermined torque value acting on the cutting blade 12, and actuating the movement means 13 for moving the cutting blade 12, for example with a motion for moving away from the ground 100 in such a way as to preserve the blade 12 and not adversely affect the integrity of the cutting module 1 as well as guaranteeing a precise and accurate cutting without burrs.

In fact, it should be noted that an increase in the resistant torque on the cutting blade 12, with the adjustable cutting module 1 in use, is attributable to an increase in the slope of the ground 100 which the adjustable cutting module 1 meets during its translation along the ground 100, which carries the blade 12 too close to the roots of the turf and/or the ground 100 itself.

The above-mentioned control unit is also configured for measuring a resistant torque less than a predetermined torque value acting on the cutting blade 12, and actuating the movement means 13 for moving the cutting blade 12, for example by a movement towards the ground 100, in such a way as to follow a difference in level of the ground 100 and/or the turf and not adversely affect the precision of the cut with different and unattractive heights of the cut.

As mentioned above, it should be noted that reduction in the resistant torque on the cutting blade 12, with the adjustable cutting module 1 in use, is attributable to a reduction in the slope of the ground 100 which the adjustable cutting module 1 meets during its translation along the ground 100, which carries the blade 12 too far from the turf and/or the ground 100 itself.

Advantageously, the means 13 for moving the adjustable cutting module 1 comprise at least one actuator 13a configured for making an adjustment of a distance "d" of the cutting plane "P" of the cutting blade and simultaneously or separately actuating the cutting blade 12 for cutting the turf.

With reference to Figure 1, the cutting module 1 is such that at least the cutting means 11 and the movement means 13 are operatively associated with the supporting structure 10 which has an upper end 10a configured for fixing at least the actuator 13a and a lower end 10b facing the cutting blade 12 and the respective cutting plane "P". In other words, in the operating condition of the cutting module 1, the central axis "X" of rotation is positioned vertically; preferably the central axis "X" of rotation is positioned perpendicularly to the ground 100 at the point where the cutting module 1 is in operation.

In other words, the cutting module 1 according this invention is configured to perform two fundamental functions; the first is to rotate the cutting blade 12 and the second is to adjust a distance "d" of the latter from the ground 100 or turf, either simultaneously or separately between the two functions. It should be noted that, preferably, the actuation of the cutting blade 12 occurs with the simultaneous rotation of the blade 12 and of the respective rotation shaft 14 relative to the central axis "X" of rotation by means of the above-mentioned actuator 13a.

The double actuation of the adjustment and the operation of the cutting blade 12 is made by the above-mentioned actuator 13a of the movement means 13 which is an electric motor

Preferably, the adjustable cutting module 1 is able to collect and store information relating to the predetermined morphology of the ground 100 and/or the type of turf so as to automatically adjust the distance "d" of the cutting plane "P" of the cutting blade 12 relative to the ground 100.

Preferably, the adjustable cutting module 1 is also capable of measuring and storing information relating to a ground 100 and establishing the correct maximum and minimum values of the resistant torque acting on the cutting blade 12 in such a way as to perform for any type of ground and grass the correct compensation/adjustment of the distance "d" of the blade 12 relative to the ground 100.

More specifically, the movement means comprise a member 15 for positioning the cutting plane "P" operatively associated with the actuator 13a. Preferably, the positioning member 15 is interposed between the rotation shaft 14 and the actuator 13a.

The positioning member 15 is actuated by the actuator 13a and is configured in such a way that the adjustment of the distance "d" of the cutting plane "P" of the cutting blade 12 relative to the ground 100 occurs with a translation at least of the cutting blade 12 along the central axis "X" of rotation. The translation of the cutting blade 12 causes an equivalent translation of the cutting plane "P" of the blade 12 along the central axis "X".

For this purpose, the rotation shaft 14 of the cutting blade 12 is a millerays shaft configured to have an axial sliding clearance along the relative central axis "X" of rotation during its rotation to allow an adjustment of the distance "d" of the blade 12 and of the respective cutting plane "P", relative to the ground 100.

With reference to a different embodiment the means 13 for moving the cutting blade 12 comprise an actuator 13a configured to adjust the distance "d" of the cutting plane "P" of the cutting blade 12 relative to the ground 100, and a further actuator 13b configured to actuate the cutting blade 12.

The cutting module 1 is configured in such a way that it is possible to carry out a simultaneous or separate actuation of the actuator 13a and the further actuator 13b.

The actuator 13a is an electric motor having its own axis of rotation "Z" which is skew relative to the central axis "X" of rotation.

Preferably, the actuator 13a has the relative axis of rotation "Z" positioned perpendicularly to the central axis "X" of rotation and neither lie in a single plane.

The further actuator 13b is an electric motor having its own axis of rotation "Y" positioned parallel relative to the central axis "X" of rotation, preferably the further actuator 13b is coaxial with the central axis "X" of rotation.

Preferably, the further actuator 13b is connected to a central or end portion of the rotation shaft 14 of the cutting blade 12.

Irrespective of the embodiments possible by means of this invention relating to the adjustable cutting module 1 described above, the positioning member 15 is physically a mechanical power transmission selected between: a conical pair of gears, male-and-female screw type coupling, chain, toothed belt. The above-mentioned mechanical power transmission is configured to transmit a mechanical power from the further actuator 13b to the rotation shaft 14, consequently the rotation shaft 14 is shaped with an upper end to interact with the positioning member 15 and at the lower end it has fixing means for fitting the cutting blade 12. In this way, the positioning member 15 will allow translation along the axis of rotation "X" of the rotation shaft 14 (and the cutting blade 12) and will simultaneously allow at the same shaft 14 turning relative to the axis "X" to actuate the cutting blade 12. Described above is the operating principle for adjustment of the cutting plane "P" and the actuation of the cutting blade 12 according to this invention for every embodiment according to this invention, whether the cutting module 1 comprises a single actuator 13a or the cutting module 1 comprises the actuator 13a and the further actuator 13b.

This invention fulfils the preset aims.

Advantageously, the adjustable cutting module according to this invention makes it possible to make a precise and accurate cut also at dips, slopes and unevenness of the ground without adversely affecting the quality in terms of appearance of the cutting of the turf.

Advantageously, the adjustable cutting module according to this invention can be installed in a simple fashion on an automatic self-propelled robot in such a way as to replace the cutting module previously installed with the one provided by this invention.

Advantageously, the adjustable cutting module according to this invention consists of few mechanical moving parts, which favours a high level of reliability and a considerable ease of maintenance and repair, as well as routine cleaning.

Advantageously, the adjustable cutting module according to this invention allows a precise and regular cutting of the turf to be obtained without damaging the blade and, in fact, with a service life of the cutting blade which is much greater than that of the cutting robots of known type.

## Claims

1. An adjustable cutting module (1) for cutting the turf of the ground (100), comprising cutting means (11) each comprising a cutting blade (12), wherein the cutting blade (12) is lying on a respective cutting plane (P) positioned at the ground (100);
comprising means (13) for moving the cutting blade (12) which are operatively associated with the cutting means (11), wherein the movement means (13) comprise an actuator (13a) configured to determine the adjustment of a distance (d) of the cutting plane (P) of the cutting blade (12) relative to the ground (100), and a further actuator (13b) configured to actuate the cutting blade (12) simultaneously or separately relative to an operation of the actuator (13a); wherein it comprises a control unit configured to measure a resistant torque acting on the cutting blade (12) when it is in use, the control unit being configured to actuate the movement means (13) to move the cutting blade (12) away from the ground (100) in an operating condition of the cutting module (1) such that the resistant torque is greater than a predetermined torque value acting on the cutting blade (12) and to actuate the movement means (13) to move the cutting blade (12) towards the ground (100) in an operating condition of the cutting module (1) such that the resistant torque is less than a predetermined torque value acting on the cutting blade (12) and **characterised in that** the actuator (13a) is an electric motor having its own axis of rotation (Z) which is skew relative to the central axis (X) of rotation.

2. The cutting module (1) according to claim 1 wherein the cutting blade (12) rotates around a central axis (X) of rotation and wherein the central axis (X) of rotation is positioned transversely relative to the cutting plane (P), the central axis (X) of rotation preferably being perpendicular to the cutting plane (P).

3. The cutting module (1) according to claim 2, wherein the movement means (13) comprise a shaft (14) for rotating the cutting blade (12) which is coaxial with the central axis (X) of rotation and has means for fixing the cutting blade (12) at one end.

4. The cutting module (1) according to claim 2, wherein the movement means (13) comprise a member (15) for positioning the cutting plane (P) which is operatively associated with the actuator (13a), the positioning member (15) being interposed between the rotation shaft (14) and the actuator (13a).

5. The cutting module (1) according to claim 4, wherein the adjustment of a distance (d) of the cutting plane (P) of the cutting blade (12) relative to the ground (100) occurs with a translation at least of the cutting blade (12) along the central axis (X) of rotation through the positioning member (15) actuated by the actuator (13a), the translation of the cutting blade (12) involving an equivalent translation of the cutting plane (P) of the blade (12) along the central axis (X).

6. The cutting module (1) according to claim 4 or 5, wherein the actuation of the cutting blade (12) occurs with the rotation of it and of the respective rotation shaft (14) relative to the central axis (X) of rotation through the actuator (13a).

7. The cutting module (1) according to any of claims 1 to 6, wherein the movement means (13) of the cutting blade (12) are configured to move the cutting blade (12) with a roto-translational movement respectively around and along the central axis (X) of rotation.

8. The cutting module (1) according to any of claims 1 to 7, wherein the further actuator (13b) is an electric motor having its own axis of rotation (Y) positioned parallel relative to the central axis (X) of rotation, the further actuator (13b) being connected to a central or end portion of the rotation shaft (14) of the cutting blade (12), the further actuator (13b) preferably being coaxial to the central axis (X) of rotation.

9. The cutting module (1) according to any of claims 1 to 8, wherein dependent on claim 4, wherein the positioning member (15) is a mechanical power transmission selected between: a conical pair of gears, screw and female screw, chain, toothed belt, the positioning member being configured to transmit a mechanical power from the further actuator (13b) to the rotation shaft (14).

10. The cutting module (1) according to any of claims 3 to 9, wherein the rotation shaft (14) of the cutting blade (12) is a splined shaft configured to have an axial sliding play along its own central axis of rotation (X).

11. The cutting module (1) according to any of claims 1 to 10, comprising a supporting structure (10) and wherein at least the cutting means (11) and the movement means (13) are operatively associated with the supporting structure (10), the supporting structure (10) having an upper end (10a) configured to house the actuator (13a) and a lower end (10b) facing the cutting blade (12) and respective cutting plane (P).

12. The cutting module (1) according to claim 11, wherein the supporting structure (10) is configured to be installed on a lawn mower robot (200) for adjusting grassy borders and cutting the turf, wherein the lawn mower robot (200) comprises at least one frame and two supporting wheels.

## Patentansprüche

1. Einstellbares Schneidemodul (1) zum Schneiden von Torf aus dem Boden (100), umfassend Schneidemittel (11), die jeweils ein Schneidemesser (12) umfassen, wobei das Schneidemesser (12) auf einer jeweiligen Schneidebene (P) liegt, die am Boden (100) positioniert ist,
umfassend Mittel (13) zum Bewegen des Schneidemessers (12), die betriebswirksam mit den Schneidemitteln (11) assoziiert sind, wobei die Bewegungsmittel (13) einen Steller (13a) umfassen, der ausgelegt ist, um die Einstellung eines Abstands (d) der Schneidebene (P) des Schneidemessers (12) zum Boden (100) zu ermitteln, sowie einen weiteren Steller (13b), der ausgelegt ist, um das Schneidemesser (12) gleichzeitig oder separat relativ zu einem Betrieb des Stellers (13a) zu betätigen,
wobei es eine Steuereinheit umfasst, die ausgelegt ist, um ein Widerstandsmoment zu messen, das auf das Schneidemesser (12) wirkt, wenn dieses in Verwendung ist, wobei die Steuereinheit ausgelegt ist, um die Bewegungsmittel (13) zu betätigen, um das Schneidemesser (12) wegführend vom Boden (100) in einem Betriebszustand des Schneidemoduls (1) zu bewegen, sodass das Widerstandsmoment größer ist als ein vorgegebener Momentwert, der auf das Schneidemesser (12) wirkt, und um die Bewegungsmittel (13) zu betätigen, um das Schneidmesser (12) hinführend zum Boden (100) in einem Betriebszustand des Schneidemoduls (1) zu bewegen, sodass das Widerstandsmoment kleiner ist als ein vorgegebener Momentwert, der auf das Schneidemesser (12) wirkt, und **dadurch gekennzeichnet, dass** der Steller (13a) ein Elektromotor ist, aufweisend seine eigene Rotationsachse (Z), die schräg zur mittleren Rotationsachse (X) angeordnet ist.

2. Schneidemodul (1) nach Anspruch 1, wobei sich das Schneidemesser (12) um eine mittlere Rotationsachse (X) dreht und wobei die mittlere Rotationsachse (X) quer zur Schneidebene (P) angeordnet ist, wobei die mittlere Rotationsachse (X) vorzugsweise senkrecht zur Schneidebene (P) angeordnet ist.

3. Schneidemodul (1) nach Anspruch 2, wobei die Bewegungsmittel (13) eine Welle (14) für die Drehung des Schneidemessers (12) umfassen, die koaxial mit der mittleren Rotationsachse (X) angeordnet ist und Mittel zum Fixieren des Schneidemessers (12) an einem Ende aufweist.

4. Schneidemodul (1) nach Anspruch 2, wobei die Bewegungsmittel (13) ein Element (15) zum Positionieren der Schneidebene (P) umfassen, das betriebswirksam mit dem Steller (13a) assoziiert ist, wobei das Positionierungselement (15) zwischen der Rotationswelle (14) und dem Steller (13a) angeordnet ist.

5. Schneidemodul (1) nach Anspruch 4, wobei die Einstellung eines Abstands (d) der Schneidebene (P) des Schneidemessers (12) zum Boden (100) mit einer Verschiebung von mindestens dem Schneidemesser (12) entlang der mittleren Rotationsachse (X) durch das Positionierungselement (15), betätigt durch den Steller (13a), stattfindet, wobei die Verschiebung des Schneidemessers (12) eine äquivalente Verschiebung der Schneidebene (P) des Messers (12) entlang der mittleren Achse (X) beinhaltet.

6. Schneidemodul (1) nach Anspruch 4 oder 5, wobei die Betätigung des Schneidemessers (12) mit dessen Drehung und der der jeweiligen Rotationswelle (14) relativ zur mittleren Rotationsachse (X) durch den Steller (13a) stattfindet.

7. Schneidemodul (1) nach einem der Ansprüche 1 bis 6, wobei die Bewegungsmittel (13) des Schneidemessers (12) ausgelegt sind, um das Schneidemesser (12) mit einer Drehverschiebebewegung jeweils rund um die und entlang der mittleren Rotationsachse (X) zu bewegen.

8. Schneidemodul (1) nach einem der Ansprüche 1 bis 7, wobei der weitere Steller (13b) ein Elektromotor ist, aufweisend eine eigene Rotationsachse (Y), die parallel relativ zur mittleren Rotationsachse (X) positioniert ist, wobei der weitere Steller (13b) mit einem mittleren oder endseitigen Abschnitt der Rotationswelle (14) des Schneidemessers (12) verbunden ist, wobei der weitere Steller (13b) vorzugsweise koaxial zur mittleren Rotationsachse (X) angeordnet ist.

9. Schneidemodul (1) nach einem der Ansprüche 1 bis 8, abhängig von Anspruch 4, wobei das Positionierungselement (15) ein mechanisches Leistungsgetriebe ist, ausgewählt zwischen einem Paar Kegelradgetrieben, Schraube und Schraubenmutter, Kette, Zahnriemen, wobei das Positionierungselement ausgelegt ist, um eine mechanische Kraft vom weiteren Steller (13b) auf die Rotationswelle (14) zu übertragen.

10. Schneidemodul (1) nach einem der Ansprüche 3 bis 9, wobei die Rotationswelle (14) des Schneidemessers (12) eine Keilwelle ist, ausgelegt, um ein axiales Gleitspiel entlang ihrer mittleren Rotationsachse (X) aufzuweisen.

11. Schneidemodul (1) nach einem der Ansprüche 1 bis 10, umfassend eine Halterungskonstruktion (10), und wobei mindestens die Schneidmittel (11) und die Bewegungsmittel (13) betriebswirksam mit der Halterungskonstruktion (10) assoziiert sind, wobei die Halterungskonstruktion (10) ein oberes Ende (10a) aufweist, ausgelegt, um den Steller (13a) unterzubringen, und ein unteres Ende (10b), das dem Schneidemesser (12) und der jeweiligen Schneidebene (P) zugewandt ist.

12. Schneidemodul (1) nach Anspruch 11, wobei die Halterungskonstruktion (10) ausgelegt ist, um in einem Rasenmäherroboter (200) eingebaut zu werden, um Graskanten zu beschneiden und Torf zu schneiden, wobei der Rasenmäherroboter (200) mindestens einen Rahmen und zwei Halteräder umfasst.

## Revendications

1. Module de coupe réglable (1) destiné à couper le gazon d'un terrain (100), comprenant des moyens de coupe (11) comprenant chacun une lame de coupe (12), dans lequel la lame de coupe (12) repose sur un plan de coupe (P) respectif positionné en correspondance du terrain (100) ;
comprenant des moyens (13) servant à déplacer la lame de coupe (12) étant associés fonctionnellement aux moyens de coupe (11), dans lequel les moyens de déplacement (13) comprennent un actionneur (13a) configuré pour déterminer le réglage d'une distance (d) du plan de coupe (P) de la lame de coupe (12) par rapport au terrain (100), et un actionneur (13b) supplémentaire configuré pour actionner la lame de coupe (12) simultanément ou séparément par rapport à un fonctionnement de l'actionneur (13a) ;
dans lequel il comprend une unité de commande configurée pour mesurer un couple de résistance agissant sur la lame de coupe (12) lorsqu'elle est en fonctionnement, l'unité de commande étant configurée pour actionner les moyens de déplacement (13) pour éloigner la lame de coupe (12) du terrain (100) dans une condition fonctionnelle du module de coupe (1) de sorte que le couple de résistance soit supérieur à une valeur de couple prédéterminée agissant sur la lame de coupe (12) et pour actionner les moyens de déplacement (13) pour rapprocher la lame de coupe (12) du terrain (100) dans une condition fonctionnelle de la lame de coupe (1) de sorte que le couple de résistance soit inférieur à une valeur de couple prédéterminée agissant sur la lame de coupe (12) et **caractérisé en ce que** l'actionneur (13a) est un moteur électrique comportant son propre axe de rotation (Z) étant en biais par rapport à l'axe central (X) de rotation.

2. Module de coupe (1) selon la revendication 1, dans lequel la lame de coupe (12) tourne autour d'un axe central (X) de rotation et dans lequel l'axe central (X) de rotation est positionné transversalement par rapport au plan de coupe (P), l'axe central (X) de rotation étant de préférence perpendiculaire au plan de coupe (P).

3. Module de coupe (1) selon la revendication 2, dans lequel les moyens de déplacement (13) comprennent un arbre (14), pour faire tourner la lame de coupe (12), étant coaxial à l'axe central (X) de rotation et comportant des moyens pour fixer la lame de coupe (12) à une extrémité.

4. Module de coupe (1) selon la revendication 2, dans lequel les moyens de déplacement (13) comprennent un organe (15), servant à positionner le plan de coupe (P), étant associé fonctionnellement à l'actionneur (13a), l'organe de positionnement (15) étant interposé entre l'arbre de rotation (14) et l'actionneur (13a).

5. Module de coupe (1) selon la revendication 4, dans lequel le réglage d'une distance (d) du plan de coupe (P) de la lame de coupe (12) par rapport au terrain (100) se déroule avec au moins une translation de la lame de coupe (12) le long de l'axe central (X) de rotation à travers l'organe de positionnement (15) actionné par l'actionneur (13a), la translation de la lame de coupe (12) impliquant une translation équivalente du plan de coupe (P) de la lame (12) le long de l'axe central (X).

6. Module de coupe (1) selon les revendications 4 ou 5, dans lequel l'actionnement de la lame de coupe (12) se déroule avec la rotation de celle-ci et de l'arbre de rotation (14) respectif par rapport à l'axe central (X) de rotation par l'intermédiaire de l'actionneur (13a).

7. Module de coupe (1) selon l'une quelconque des revendications de 1 à 6, dans lequel les moyens de déplacement (13) de la lame de coupe (12) sont configurés pour déplacer la lame de coupe (12) avec un déplacement par rototranslation respectivement autour et le long de l'axe central (X) de rotation.

8. Module de coupe (1) selon l'une quelconque des revendications de 1 à 7, dans lequel l'actionneur (13b) supplémentaire est un moteur électrique ayant son propre axe de rotation (Y) positionné parallèlement par rapport à l'axe central (X) de rotation, l'actionneur (13b) supplémentaire étant relié à une partie centrale ou terminale de l'arbre de rotation (14) de la lame de coupe (12), l'actionneur (13b) supplémentaire étant de préférence coaxial à l'axe central (X) de rotation.

9. Module de coupe (1) selon l'une quelconque des revendications de 1 à 8, dans lequel elles dépendent de la revendication 4, dans lequel l'organe de positionnement (15) est une transmission de puissance mécanique sélectionnée entre : une paire conique d'engrenages, une vis et une vis femelle, une chaîne, une courroie crantée, l'organe de positionnement étant configuré pour transmettre une puissance mécanique de l'actionneur (13b) supplémentaire à l'arbre de rotation (14) .

10. Module de coupe (1) selon l'une quelconque des revendications de 3 à 9, dans lequel l'arbre de rotation (14) de la lame de coupe (12) est un arbre cannelé configuré pour comporter un jeu coulissant axial le long de son propre axe central de rotation (X) .

11. Module de coupe (1) selon l'une quelconque des revendications de 1 à 10, comprenant une structure de support (10) et dans lequel au moins les moyens de coupe (11) et les moyens de déplacement (13) sont fonctionnellement associés à la structure de support (10), la structure de support (10) comportant une extrémité supérieure (10a) configurée pour loger l'actionneur (13a) et une extrémité inférieure (10b) orientée vers la lame de coupe (12) et le plan de coupe (P) respectif.

12. Module de coupe (1) selon la revendication 11, dans lequel la structure de support (10) est configurée pour être installée sur un robot tondeuse (200) pour égaliser les bordures gazonnées et couper le gazon, dans lequel le robot tondeuse (200) comprend au moins un châssis et deux roues de support.
